# EUROPEAN PATENT APPLICATION

(11) **EP 3 770 628 A1**
(43) Date of publication of application: **27.01.2021**
(21) Application number: 19188013.7
(22) Date of filing: 24.07.2019
(51) Int. Cl.: G01S 7/02, G01S 13/34, G01S 13/931

(54) **A METHOD FOR RADAR INTERFERENCE MITIGATION**

(71) Applicant: Veoneer Sweden AB, 447 83 Vårgårda (SE)
(72) Inventor: Fetterman, Matt, 97464 Niederwerrn (DE); Moss, Jonathan, 97464 Niederwerrn (DE); Lefevre, Andreas, 97464 Niederwerrn (DE); Fuchs, Martin, 97464 Niederwerrn (DE); Goelz, Hansjerg, 97464 Niederwerrn (DE)
(74) Representative: Westpatent AB

(57) **Abstract**

A method for suppressing interference (180) in a received radar signal (125). The method comprises obtaining a sequence of time domain samples of the received radar signal (125), determining, for a current time domain sample in the sequence of time domain samples, a corresponding predicted time domain sample of the radar signal, based on a weighted combination of at least part of the obtained sequence of time domain samples. If interference (180) is detected in the current time domain sample, the method replaces the current time domain sample by the corresponding predicted time domain sample in the sequence of time domain samples.

## Description

The present disclosure relates to interference in radar signals, and in particular to suppression of such interference. The radar systems discussed herein are suitable as vehicle radar systems.

Many vehicle radar systems comprise radar transceivers that are arranged for generating radar signals that are transmitted, reflected and received by means of appropriate antennas comprised in the radar system. The radar signals may for example be in the form of FMCW (Frequency Modulated Continuous Wave) signals where frequency chirp signals are formed in a well-known manner.

In a multi-radar environment, radars may interfere with each other as frequency chirps cross or come close to each other in frequency. When this happens, a burst of interference somewhere within the received signal during one or more of the chirp signals can be observed. This problem becomes apparent when the received analogue signal has been converted to a digital baseband signal and typically is processed by the radar system using one or more Fast Fourier Transform (FFT) processing steps which converts signals in digital time domain into digital frequency domain signals.

If interference is present in one or more of the chirp signals, the noise floor will be raised since the noise may be spread across a wide band of frequencies. This raising of the noise floor has the effect of reducing the range and accuracy of the radar, which of course is undesirable.

EP3489710 A1 discloses an arrangement for radar interference suppression. Here, interference mitigation is achieved by replacing obtained radar samples by modified samples which are generated based on frequency domain processing of batches of samples. However, additional interference suppression methods are desired.

It is an object of the present disclosure to provide improved methods and devices for interference suppression in radar signals. This object is achieved by a method for suppressing interference in a received radar signal. The method comprises obtaining a sequence of time domain samples of the received radar signal. The method also comprises determining, for a current time domain sample in the sequence of time domain samples, a corresponding predicted time domain sample of the radar signal, based on a weighted combination of at least part of the obtained sequence of time domain samples. Then, if interference is detected in the current time domain sample, the method replaces the current time domain sample by the corresponding predicted time domain sample in the sequence of time domain samples. This interference suppression method robustly suppresses interference in received radar signals and at the same time allows for efficient implementation in digital logic, which is an advantage. The method is not associated with high computational complexity, and offers processing with low delay, meaning that large amounts of radar data from, e.g., multiple antennas, can be handled without overloading a reasonably sized processing system.

According to aspects, determining the predicted time domain sample is based on filtering the sequence of time domain samples by a Finite Impulse Response (FIR) filter defined by a vector of filter weights. The FIR filter allows for a particularly efficient digital implementation with low complexity and low processing delay. The FIR filter can be either a fixed filter with pre-configured filtering function or an adaptive filter which adapts to current filtering conditions. The filter length can be either fixed for the duration of the filtering or adapted. For instance, the length can be successively increased during filtering, starting at some initial length or start length N=N1 and then gradually increased up to some maximum length N=N2. This maximum length may correspond to the length of the obtained sequence of time domain samples of the received radar signal.

A gradient descent based method can be used to update filter weights. This method provides a computationally expensive yet accurate way to determine suitable filter weights. Alternatively, the filter design can be based on some autoregressive model, and the filter weights can be updated based on, e.g., the Burg method.

According to aspects, determining the predicted time domain sample is based on filtering the sequence of time domain samples by a Kalman filter associated with a Kalman gain factor K and an estimated covariance matrix P. The Kalman filter is adaptive in that it adapts to current filtering conditions, without need for manually set thresholds and the like, which is an advantage.

According to aspects, determining the predicted time domain sample is based on filtering the sequence of time domain samples in a forward direction F starting from a first time domain sample and in a reverse or opposite direction R ending at the first time domain sample, wherein the corresponding predicted time domain sample of the radar signal is obtained as a weighted combination of the filtering in forward and reverse directions. By filtering in both forward and reverse directions additional noise suppression is achieved, and a more accurate prediction sample can be generated. Also, a more robust method is provided due to the double filtering processes.

According to aspects, the method comprises detecting at least one onset time instant of interference based on the forward filtering, and a respective cessation time instant of interference based on the reverse filtering. Thus, sections of interference in the sequence of obtained radar samples can be identified and replaced in a more efficient manner.

According to aspects, the replacing comprises replacing a pre-determined length sub-sequence of time domain samples adjacent to the current time domain sample by a corresponding sequence of predicted time domain samples. Since an interference burst typically comprises a block of around 100 samples or more, it may be that not all samples within the burst meet the criteria for interference detection. This can be solved, e.g., with the use of a counter that is reset when an interference sample is detected and is incremented each subsequent sample point such that subsequent sample points are also considered interference until the counter reaches a threshold of perhaps 10 sample points or so. This ensures that the whole block of interference is replaced resulting in a signal without unwanted jumps or discontinuities, which is an advantage.

According to aspects, interference is detected based on a difference between the current time domain sample and a previous time domain sample. By observing this easy to compute difference an efficient yet robust method for detecting presence of interference is provided.

According to aspects, interference is detected based on a difference between the predicted time domain sample and the current time domain sample. This is, under some circumstances, a more reliable method for detecting interference compared to, e.g., observing differences between consecutive samples in the obtained radar signal. A large error signifies a model mismatch in the filtering process, which is often due to the presence of interference. Thus, a more reliable method for detecting interference in a sequence of radar samples is provided.

According to aspects, detection criteria for detecting interference is dynamically adapted depending on scenario. This way the method can be made more or less sensitive to interference. It may be a drawback to replace too many samples by predicted samples, in which case the detection criteria can be relaxed in order to maintain more samples when needed. This way the interference suppression can be adjusted based on the interference scenario, to work well in scenarios with relatively weak but commonly occurring interference as well as in scenarios with rare strong bursts of interference.

According to aspects, the method also comprises determining an error based on a difference between the predicted time domain sample and the current time domain sample. Filtering the sequence of time domain samples may comprise updating filter weights based on the determined error. The filter can be adapted such as to minimize the error, thereby learning a model of what the received radar signal should look like in case no interference is present. The error can also be used to drive a Kalman filtering algorithm as mentioned above, or a gradient descent method for updating filter weights of an adaptive FIR filter or the like.

According to aspects the updating is only performed in case no interference is detected in the current time domain sample. This way a more robust filtering process is obtained.

According to other aspects, a set of filter weights representing the filter weights at different time delays are stored in memory. This way, when interference is detected, the filter weights can be reset to a state a few sample instants before the interference was detected, effectively providing a guard interval for filter update.

There are also disclosed herein control units and vehicles associated with the above-mentioned advantages. The herein disclosed methods may be executed in a vehicle or at least in part by a remote server wirelessly connected to the vehicle.

### BRIEF DESCRIPTION OF THE DRAWINGS

The present disclosure will now be described more in detail with reference to the appended drawings, where:
Figure 1 shows a schematic top view of a vehicle;
Figure 2 shows an example of an FMCW chirp signal;
Figures 3A-E illustrate interference suppression in a radar signal;
Figure 4 illustrates an example filtering operation;
Figure 5 schematically illustrates sets of stored filter weights;
Figure 6 is a flowchart illustrating methods according to the present disclosure;
Figure 7 shows an example control unit; and
Figure 8 shows an example computer program product.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

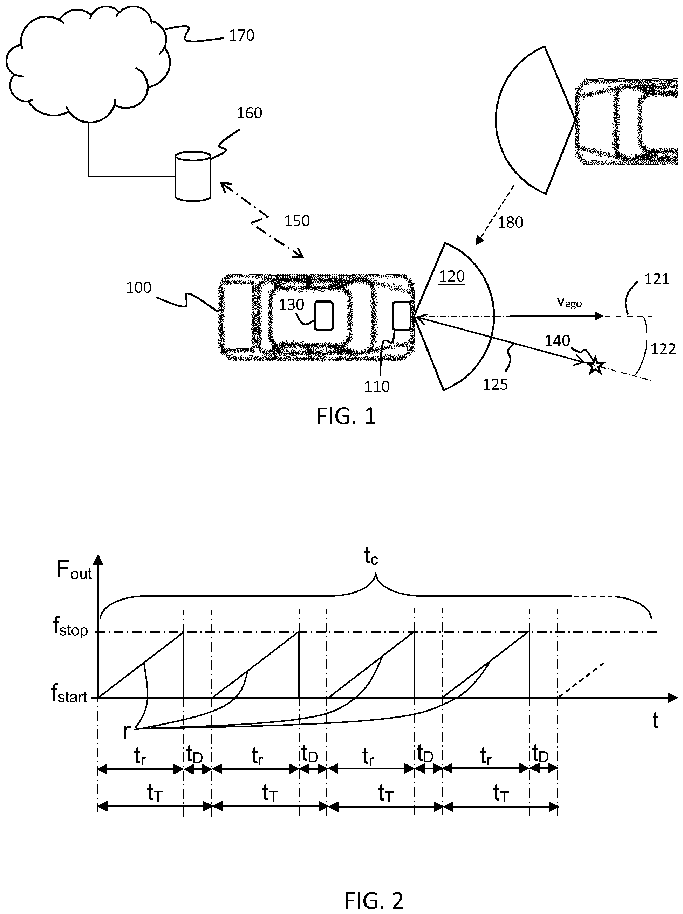

Figure 1 shows a vehicle 100 equipped with a vehicle radar system 110, 130. The vehicle moves in a direction with velocity vector v_{ego}. The vehicle radar system comprises at least one vehicle radar transceiver 110 and a radar data processing system or control unit 130. Some vehicles may comprise a plurality of radar transceivers configured in connection to an antenna array.

According to an example, the vehicle radar system 110, 130 comprises a transceiver arrangement that is arranged for generating and transmitting radar signals in the form of frequency modulated continuous wave (FMCW) chirp signals, and to receive reflected radar signals 125, where the transmitted signals have been reflected by an object 140.

As exemplified in Figure 2, a transmitted FMCW signal is in the form of a continuous wave where the output frequency Fₒᵤₜ varies from a first frequency fₛₜₐᵣₜ to a second frequency fₛₜₒₚ over the course of a ramp r, where each signal comprises repeating cycles of a plurality of frequency ramps r. A radar signal such as the radar signal exemplified in Figure 2 may be called a chirp signal. A cycle for such a chirp signal lasts for a certain cycle time t_{c}, each ramp r lasts a certain ramp time tᵣ, having a ramp period time t_{T}. Between two consecutive ramps of the chirp signal there is a delay time t_{D}.

FMCW radar operation and signal processing is known in general and will not be discussed in more detail herein.

The radar data processing system 130 is arranged to control operation of the radar transceiver 110, and to obtain data from the radar transceiver 110, such as detections or data points corresponding to objects 140 in vicinity of the vehicle 100. The radar transceiver 110 may comprise a single radar unit or a plurality of radar units, potentially of different type and/or of different configuration. The different radar units may, e.g., be arranged as front radars, side radars, and/or rearward facing radars.

According to an example, the vehicle radar system 110, 130 is arranged to generate a number of data points comprising coordinates in a relative coordinate system, i.e., relative to the location and orientation of the vehicle 100. The coordinates may be Cartesian coordinates, or they may be polar coordinates. The radar transceivers 110 may also be arranged to generate raw data for further processing, or a more refined feature vector extracted from the radar data. The data points may also comprise additional information, such as signal strength values or measures of signal-to-noise ratio (SNR).

One or more timestamps may also be associated with the information passing between the vehicle radar transceiver 110 and the control unit 130. The time stamps may be assigned per data point or be common to a set of data points.

The radar transceiver 110 is associated with a field of view 120. In case the radar transceiver 110 is a front radar, a boresight direction 121 of the radar 110 often coincides with a center line of the field of view 120. In case the vehicle radar is instead configured as a side radar, then the boresight direction may point in some other angle compared to the forward direction of the vehicle 100.

The vehicle radar system 110, 130 in Figure 1 is subject to interference 180 from an external radar transceiver. Such interference can come from a plurality of different sources, including other radar transceivers on the same vehicle 100.

For an FMCW system, interference occurs when two or more radar signals are close together in frequency for a period of time, specifically within the intermediate frequency (IF) receiving bandwidth of each other, or cross each other in frequency. The net effect is that the time domain signal, i.e., the raw data or digitally sampled signal obtained after frequency down-conversion of the received radio frequency signal, experiences a burst of interference, which may be high compared to the wanted radar-return signal. There may be multiple interference bursts within a short time window.

It is appreciated that the term 'interference' is here to be interpreted broadly to comprise any signal component or signal comprised in the radar signal which has a detrimental effect on performance of a system making use of the received radar signal. Consequently, interference may comprise any of, e.g., external interference from other transmitters and radio frequency sources, internal interference from circuitry of the radar transceiver or other active components located close to the radar receiver, and pulsed interference signals which are associated with limited time duration.

As mentioned above, some radar transceivers comprise antenna arrays which enable estimating not only distance to an object but also a bearing, i.e., an angle 122 measured from the radar boresight direction 121 to the detected object 140. This additional information may be of importance to vehicle control algorithms, but also means that more raw data is generated in the radar system. Thus, efficient radar signal processing is required in order to be able to handle the large amounts of data which are generated from the multiple reception antennas.

Vehicle radar systems are often associated with strict requirements on delay. This means that any signal processing performed om the received radar signal will operate under delay constraints. Thus, complex algorithms either require significant processing power in order to meet delay constraints or must be excluded due to the delay constraints.

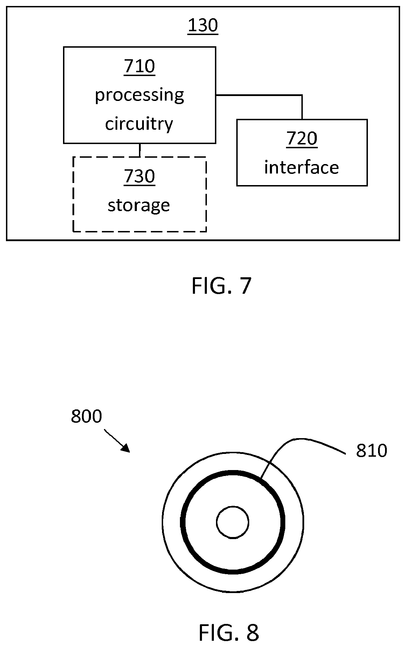

The vehicle radar system 110,130 may be connected via wireless link 150 to a remote server 160, which in turn may be comprised in a remote network 170. This server and network may be configured to assist the vehicle 100 in performing radar interference suppression. For instance, the remote server 160 may be arranged to configure parameters such as detection thresholds used by the control unit 130 and the like remotely. An optional storage module may also be comprised in the vehicle radar system. The storage module may store data comprising information about a surrounding environment of the vehicle 100 and about past vehicle operations, such as past experiences of radar interference and radar interference suppression operations. The storage module will be discussed in more detail below in connection to Figure 7.

The radar interference suppression algorithms discussed herein mainly operate at baseband level, i.e., after down-conversion from the operational radio frequency. The techniques are based on the realization that interference generates bursts of distortion at baseband which can be detected. Once detected, the baseband signal can be repaired by prediction samples, which predict what the radar signal would have looked in case no interference was present. This prediction is made possible at least in part since the baseband signal is relatively narrowband and also often periodic, which means that it is correlated in time. Thus, a current sample of the radar signal can be efficiently approximated, at least to some degree, by a weighted combination of adjacent samples in the received signal. This weighted combination can be efficiently obtained from a filtering process operating on the received radar signal.

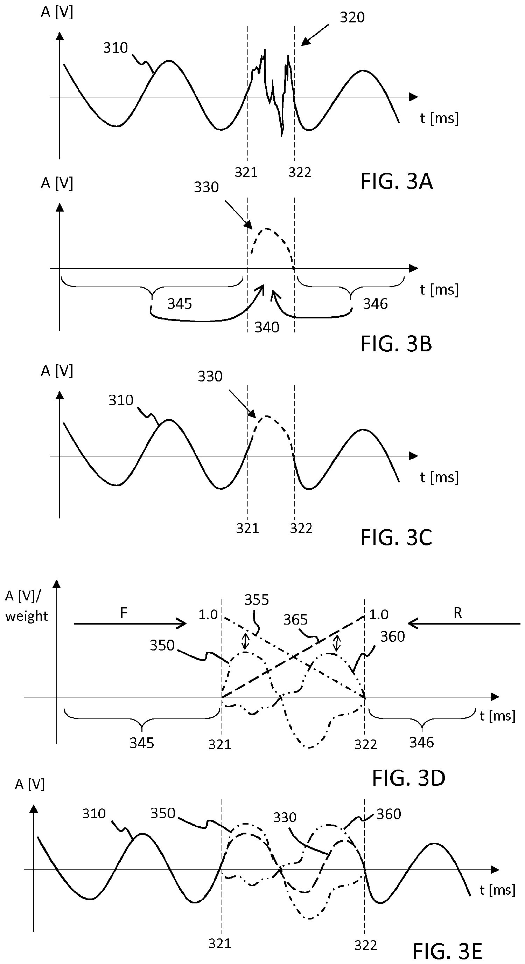

Figures 3A-3C show graphs of example baseband radar signal amplitude A over time in Volts, which illustrate the general idea behind the interference suppression methods disclosed herein. Figure 3A shows a received radar signal 310 at baseband. A part 320 of the received signal from time instant 321 to time instant 322 has been subjected to interference. This interference will complicate object detection by, e.g., raising noise floor. It is desired to suppress this interference.

Since the received radar signal is narrow-band, it exhibits a degree of time correlation. It is therefore possible to 'predict' what it would have looked like based on a weighted combination of at least part of the received radar signal had the interference not been present. This prediction 330 is illustrated in Figure 3B with a dashed line. The prediction can be obtained, e.g., as a weighted combination 340 of the received radar signal outside 345, 346 of the interfered section 320. This way, if interference is detected in some time domain sample or samples of the received radar signal, the distorted section 320 can be replaced by the prediction 330, as illustrated in Figure 3C. This way distortion can be suppressed in an efficient and reliable manner, which is an objective of the herein disclosed techniques.

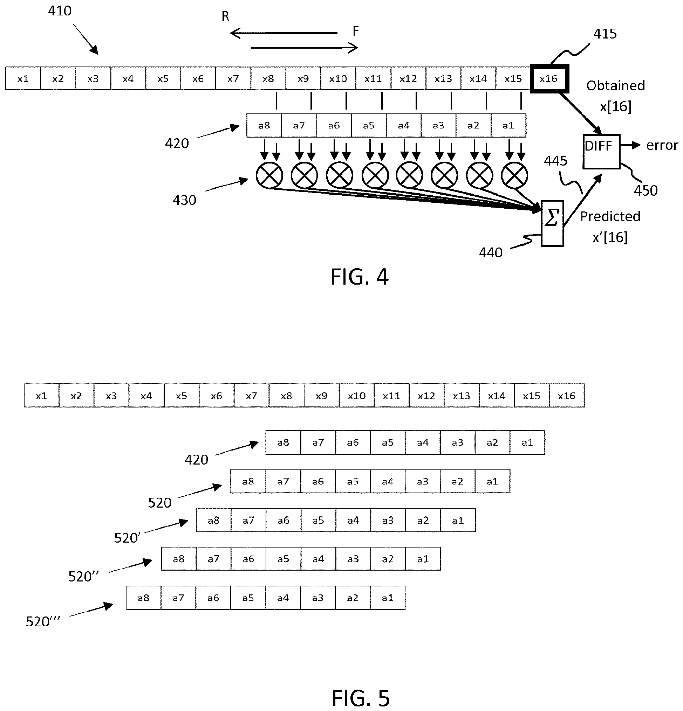

Notably, the generation of the prediction signal can be performed in a particularly efficient manner based on a weighted combination of time domain samples before the interfered section 345. This will be exemplified and discussed below in connection to Figure 4.

The sequence of time domain samples can also be filtered in both forward F and reverse R directions as indicated in Figure 3D, i.e., predicting based on both past and future samples of the received radar signal relative to the interfered section 320. The forward filter which filter past samples 345 generates one set of predicted samples 350, shown as a dash-dotted line, and the reverse filter which filters future samples 346 in the reverse direction R generates another set of predicted samples 360 shown as a dashed-double dotted line. The longer into the interfered section 320 that each filter progresses, the larger the prediction error is likely to become. I.e., at the beginning 321 of the interfered part 320, the forward filter filtering in direction F is likely to be more accurate and generate a smaller prediction error compared to the reverse filter filtering in direction R. At the end 322 of the interfered part 320, the reverse is more likely to be the case, i.e., that the reverse filter generates a smaller error compared to the forward filter. It is proposed herein to merge the two filter outputs by weighting each filter output according to how long into the interfered part the current sample is. The weighting can be linear as indicated in Figure 3D, where the forward filter weight w1 355 starts from 1.0, and then linearly declines to 0.0, while the reverse filter weight w2 365 starts from 0.0 and linearly increases up to 1.0. The two filter weights then always sum to one. The weighting can also be non-linear, e.g., based on a squared distance from the start of filtering. In such case the filter weights can be determined as w1=d1²/(w1+w2), w2=d2²/(w1+w2), where d1 and d2 represent the distance to the predicted sample from the start of the interfered part 320 and the end of the interfered part, respectively.

The predicted sample x'[n] for predicting a current sample x[n] may then be determined as x'[n]=w1^{∗}x1'[n]+w2^{∗}x2'[n] (assuming normalized weights w1 and w2), where x1'[n] is the predicted sample from the forward filter and x2'[n] is the predicted sample from the reverse filter. This way a type of "cross-fading" is performed when combining the signal estimate or prediction in forward direction with the reverse direction to get a signal that has no jumps and meets neatly in the middle of the interfered section 320. Figure 3E illustrates the prediction 330 (dashed line) obtained by merging the two filter outputs. It is noted that the forward filter 350 (dash-dotted line) dominates the prediction to the left, while the reverse filter 360 (dashed-double dotted line) dominates the prediction to the right.

Figure 4 shows an example of generating the prediction signal 445; A sequence of time domain samples {x[1], x[2], ..., x[16]} of the received radar signal 125 has been obtained, e.g., from an analog to digital converter (ADC). The sequence of time domain samples represents a baseband version of the received radar signal 125.

For each sample x[n] 415 of the received radar signal, a prediction sample x'[n] is generated by filtering the sequence up to the current sample x[n]. The filter shown in Figure 4 is a Finite Impulse Response (FIR) filter defined by a vector of weights {a[1], a[2], ..., a[8]}. The filter weights may be fixed or may be adapted over time, as will be discussed below in more detail. The weights may be complex valued or real valued.

This way, if interference 180 is detected in some current time domain sample (x[n], 415), it is possible to replace the current time domain sample (x[n], 415) by the corresponding predicted time domain sample (x' [n], 445) in the sequence of time domain samples ({x[1], x[2], ..., x[T]}, 410) in order to suppress interference and 'repair' the ADC output signal.

According to some aspects, the vector of filter weights {a[1], a[2], ..., a[N]} is extended during the filtering from an initial length or start length N=N1 to a maximum length N=N2. This way, as long as no interference is detected, the filter grows in size to give better predictions of the current sample. When interference is detected, the filter length can either be cut back to the initial value or the filter length can be maintained at the value where interference was detected.

According to some aspects, as discussed above in connection to Figure 3D and 3E, determining the predicted time domain sample x'[n], 445 is based on filtering S23 the sequence of time domain samples {x[1], x[2], ..., x[T]}, 410 in a forward direction F starting from a first time domain sample and in a reverse direction R ending at the first time domain sample, wherein the corresponding predicted time domain sample x'[n], 445 of the radar signal is obtained as a weighted combination of the filtering in forward F and reverse R directions. The coefficients in vector a may be set to zero at the start of the current chirp, or the values from the previous chirp may be used as a starting vector. The process operating in the reverse direction R would typically but not necessarily use the vector {a[1], a[2], ..., a[N]} already learned running in the forward direction F since the coefficients are related to the frequency of the signal components rather than the phase. The weighting between the two filtering processes can be determined based on a filtered length, i.e., a time of convergence of the two filters. Thus, at the first samples in a chirp (or in an interfered section) the forward filter is given less weights, while at the end of the chirp (or interfered section) the reverse filter is given less weight. In the middle the two filters can be weighted approximately equally.

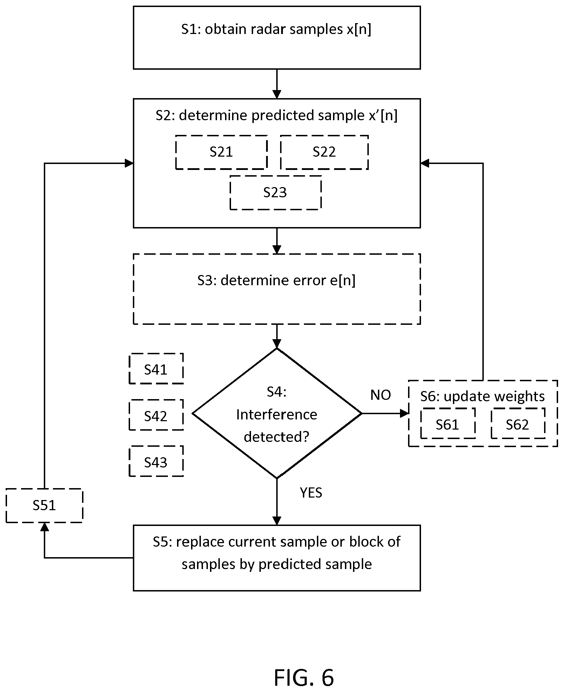

Figure 6 shows a flow chart illustrating details of methods disclosed herein. There is shown a method for suppressing interference 180 in a received radar signal 125. The method comprises obtaining S1 a sequence of time domain samples {x[1], x[2], ..., x[T]}, 410 of the received radar signal 125.

The obtained time domain samples of the received radar signal may, e.g., originate from an ADC arranged to convert an analog baseband radar signal into discrete time domain samples of the radar signal. This means that the methods are applicable to digital baseband signals. In particular to baseband FMCW radar signals.

The method comprises determining S2, for a current time domain sample x[n], 415 in the sequence of time domain samples 410, a corresponding predicted time domain sample x'[n], 445 of the radar signal, based on a weighted combination 420, 430, 440 of at least part of the obtained sequence of time domain samples {x[1], x[2], ..., x[T]}, 410. One example of such as weighted combination was discussed above in connection to Figure 4, additional examples will be given below.

For example, determining the predicted time domain sample x'[n], 445 can be based on filtering S21 the sequence of time domain samples {x[1], x[2], ..., x[T]}, 410 by a Finite Impulse Response (FIR) filter defined by a vector of weights {a[1], a[2], ..., a[N]}, as discussed above in connection to Figure 4.

The weights in this filter can be fixed, obtained from an external source such as the server 160 or network 170, or adapted over time.

In general, the sequence of time domain samples {x[1], x[2], ..., x[T]}, 410 of the received radar signal 125 can be approximated or modelled by an autoregressive (AR) model. An autoregressive model specifies that the output variable, i.e., the time domain samples x[n], depends linearly on the previous values and on a stochastic term (an imperfectly predictable term). The model is in the form of a stochastic difference equation. Together with the moving-average (MA) model, it is a special case and key component of the more general autoregressive moving average (ARMA) and autoregressive integrated moving average (ARIMA) models of time series.

To find the coefficients on an AR model, here the weights of the filter, a number of different known methods can be used. One such example is the Burg method, also sometimes referred to as the 'maximum entropy estimate'.

Another way to adapt FIR filter weights is by the gradient descent method. Compared to FIR filter weight update based on AR modelling, the gradient descent method is often less computationally intensive and therefore more suitable for implementation in embedded processors and the like associated with limitations on processing capacity. According to the gradient descent method, an error signal is formed by taking the difference between the predicted sample x'[n] and the obtained sample x[n]. This difference is an error signal e[n]=x'[n]-x[n] which can be used to update filter weights as *a*^{(*i*+1)} = *a*^{(*i*)} - *K* ∗ *e* ∗ *x*[*n -* 1:*n* - *N*], where i is an iteration index, K is a step size, *x*[*n* - 1:*n* - *N*] denotes a time reversal of vector x, and e is the error. K can be seen as a learning coefficient that can be used to allow the signal to converge more slowly and reduce the noise transferring from the signal to the vector a. The value of K can be adapted to be larger in the beginning of a chirp signal and smaller towards the end of the chirp signal. The filter weight update expression above uses the same value of K for all filter weights, according to some aspects, different weights can be used for different tap coefficients. This will cause a different rate of convergence at different parts of the filter, which may be advantageous in case long filters are used, where the end sections of the filter will have relatively small weight values that require more careful (slow) update compared.

In summary, according to some aspects, the method comprises determining S3 an error e[n] based on a difference 450 between the predicted time domain sample x'[n], 445 and the current time domain sample x[n], 415, wherein filtering the sequence of time domain samples {x[1], x[2], ..., x[T]}, 410 comprises updating S6 filter weights based on the error e[n].

Other ways to update the filter weights include Least Mean Squares (LMS), Zero forcing (FZ), and the like. Adaptive filtering is known in general and will therefore not be discussed in more detail herein.

It is appreciated that updating the filter weights in presence of interference may cause sub-optimal filter weights. To avoid this, a guard period can be used counted back from the first detected interfered sample. Figure 5 illustrates an example of this type of set-up. The weights of the weighted combination 420 are stored for a number of time lags, in the example four samples of lag is used. Thus, the filter weights 520 represent what the filter weights looked like before update into the weighted combination 420. The filter weights 520' represent what the filter weights 520 was before update, and so on for the weights 520" and 520"'. When interference is detected, one of these sets of filter weights can be used instead of the potentially corrupted weights in 420. Which one depends on the selected guard period. A gradually increasing interference warrants larger guard period while an abrupt onset of interference may require less guard period.

According to other aspects, determining the predicted time domain sample x'[n], 445 is based on filtering S22 the sequence of time domain samples {x[1], x[2], ..., x[T]}, 410 by a Kalman filter associated with a Kalman gain factor K and an estimated covariance matrix P.

Note that the covariance matrix estimate ***P***_{*k*|*k*} in a Kalman filter algorithm at sample k (or, equivalently, at discrete time index k) given data input up to time k is determined as ***P***_{*k*|*k*} = (***I*** - ***K**ₖ**H**ₖ*)***P***_{*k*|*k*-1}(***I*** - ***K**ₖ**H**ₖ*)***^{T}*** + ***K**ₖ**R**ₖ**K**ₖ****^{T}*,** where ***P***_{*k*|*k*-1} = ***F**ₖ**P***_{*k*-1|*k*-1}***F**ₖ**^{T}*** + ***Q**ₖ*, and where ***P*_{*k*|*k*-1}** is the covariance matrix estimate at time k given data up to time k-1, ***I*** is the identity matrix, ***K**ₖ* is the Kalman gain at time step k, ***H**ₖ* is an observation matrix at time step k, ***R**ₖ* is an assumed covariance matrix of the measurement noise, i.e., describing the uncertainty in the input radar signals, ***F**ₖ* is a state transition matrix at time step k, and ***Q**ₖ* is a process noise at time step k.

Note also that the estimate of covariance matrix ***P***_{*k*|*k*} does not depend on the actual realization of radar data, only on the assumed statistics of the error distributions and processes.

Previous and future measured chirp signal can also be used to determine filter weights. For instance, using FIR filter weights calculated by, e.g., the Kalman method from a previously measured chirp, on the assumption that the targets will only change in amplitude and frequency slowly.

It is also possible to use a section (say of length Na) of a previous chirp time domain signal and normalize by the variance of the signal and use this as coefficients a. These coefficients may or may not be updated across the chirp.

It is also possible to use the coefficients learnt in a previous chirp as a starting vector or initialization of {a[1], a[2], ..., a[N]} for the current chirp. This also covers aspects where the learning cannot be done real-time during the pipelined repair and must be calculated once as a special activity by a resource limited processor.

As noted above, if interference 180 is detected S4 in the current time domain sample x[n], 415, the method comprises replacing S5 the current time domain sample x[n], 415 by the corresponding predicted time domain sample x'[n], 445 in the sequence of time domain samples {x[1], x[2], ..., x[T]}, 410. This way an interference suppressed radar signal is provided.

Presence of interference in a sample or in a group of samples can be detected in a number of different ways, for instance, according to some aspects, the method comprises detecting S41 at least one onset time instant of interference based on the forward filtering, and a respective cessation time instant of interference based on the reverse filtering. The detection can be based on comparing the error e[n] to a threshold value. This way a section of interference can be bounded to lie between a start time instant and a stop time instant. Samples within this section can be replaced with predicted samples to suppress interference in the received radar signal 125.

There are also provided herein some reduced complexity methods for detecting interference which have shown to provide adequate performance. For instance, interference can be detected S41 based on a difference between the current time domain sample x[n], 415 and a previous time domain sample x[n-1]. The difference can, e.g., be an absolute value, or a squared value, or the like. Detection can be based on comparing the difference to a pre-configured or adaptive threshold value. The detection can also be based on statistical arguments built on an assumed distribution of the differences. In this case interference can be detected based on sequences of differences instead of based on single samples of difference. A likelihood of a given sequence of differences can be determined and compared against a threshold, which threshold can be pre-determined or adapted as the method proceeds. According to another such example, interference is detected S42 based on a difference 450 between the predicted time domain sample x'[n], 445 and the current time domain sample x[n], 415. I.e., interference is based on the error signal discussed above in connection to filter weight update. The magnitude of the error term would then be compared to a pre-determined or adaptive threshold to determine if a noise burst was present. While moving from left to right across the raw data, the error would have been observed to drop after the vector a had converged to or learnt the correct values for the current chirp. If the error suddenly rises, then that could indicate an interference burst. Hence the threshold would be dynamic across the chirp for example based on a multiple of the standard deviation of the error signal after it had converged.

The criteria for detecting interference, e.g., a threshold, can be fixed or dynamically adapted depending on scenario. For instance, some scenarios may comprise only very little interference. In such cases a more sensitive interference detection algorithm may be warranted. However, in some other cases interference may be abundant, in which case the sensitive algorithm may try to replace all the samples, which may not be preferred due to filter stability and other issues.

Since an interference burst typically comprises a block of around 100 samples or more, it may be that not all samples within the burst meet the criteria for interference detection. This potential issue can be solved with the use of a counter that is reset when an interference sample is detected and is incremented each subsequent sample point such that subsequent sample points are also considered interference until the counter reaches a threshold of perhaps 10 sample points or so. This ensures that the whole block, or at least the main part, of interference is replaced resulted in a signal without unwanted jumps. In other words, according to some aspects, the replacing comprises replacing S51 a pre-determined length sub-sequence of time domain samples adjacent to the current time domain sample x[n] by a corresponding sequence of predicted time domain samples. The length may be pre-configured, adapted, or obtained from the remote server 160.

According to some aspects, the method implements a mechanism which only permits filter update in case no interference, or at least no significant level of interference, is present. Thresholds associated with interference detection for replacement and interference detection for filter update may be the same or may be different thresholds. In other words, according to some aspects, the updating is only performed S62 in case no interference is detected in the current time domain sample x[n], 415. The thresholds for interference detection related to filter update and related to replacement may be different. For instance, the threshold related to filter update may be lower than the threshold related to replacement by the predicted sample.

One way to set thresholds is by way of the covariance matrix estimate from the Kalman filter discussed above. This covariance estimate describes likelihoods of observing error signals at a given magnitude. Thus, if an error is large enough to indicate interference can be decided based on the current estimate of covariance obtained from the Kalman filter.

Figure 7 schematically illustrates, in terms of a number of functional units, the components of the control unit 130 according to an embodiment. Processing circuitry 710 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 730. The processing circuitry 710 may further be provided as at least one application specific integrated circuit (ASIC), or field programmable gate array (FPGA).

Particularly, the processing circuitry 710 is configured to cause the control unit 130 to perform a set of operations, or steps. These operations, or steps, were discussed above in connection to Figure 5. For example, the storage medium 730 may store the set of operations, and the processing circuitry 710 may be configured to retrieve the set of operations from the storage medium 730 to cause the control node 130 to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The control unit 130 may further comprise a communications interface 720 for communications with at least one radar device, i.e., a radar interface 720. As such, the radar interface 720 may comprise one or more transmitters and receivers, comprising analogue and digital components and a suitable number of ports for wired or wireless communication.

The processing circuitry 710 is adapted to control the general operation of the control node 130 e.g. by sending data and control signals to the radar interface 720 and the storage medium 730, by receiving data and reports from the radar interface 720, and by retrieving data and instructions from the storage medium 730. Other components, as well as the related functionality, of the control node 130 are omitted in order not to obscure the concepts presented herein.

Figure 8 shows a computer program product 800 comprising computer executable instructions 810 to execute any of the methods disclosed herein.

## Claims

1. A method for suppressing interference (180) in a received radar signal (125), the method comprising;
obtaining (S1) a sequence of time domain samples ({x[1], x[2], ..., x[T]}, 410) of the received radar signal (125),
determining (S2), for a present time domain sample (x[n], 415) in the sequence of time domain samples (410), a corresponding predicted time domain sample (x'[n], 445) of the radar signal, based on a weighted combination (420, 430, 440) of at least part of the obtained sequence of time domain samples ({x[1], x[2], ..., x[T]}, 410), and
if interference (180) is detected (S4) in the current time domain sample (x[n], 415),
replacing (S5) the current time domain sample (x[n], 415) by the corresponding predicted time domain sample (x'[n], 445) in the sequence of time domain samples ({x[1], x[2], ..., x[T]}, 410).

2. The method according to claim 1, wherein the obtained time domain samples of the received radar signal originate from an analog to digital converter, ADC, arranged to convert an analog baseband radar signal into discrete time domain samples of the radar signal.

3. The method according to any previous claim, wherein determining the predicted time domain sample (x'[n], 445) is based on filtering (S21) the sequence of time domain samples ({x[1], x[2], ..., x[T]}, 410) by a Finite Impulse Response, FIR, filter defined by a vector of filter weights ({a[1], a[2], ..., a[N] }) .

4. The method according to claim 3, wherein the vector of filter weights ({a[1], a[2], ..., a[N]}) is extended during the filtering from a start length N=N1 to a maximum length N=N2.

5. The method according to any previous claim, wherein determining the predicted time domain sample (x'[n], 445) is based on filtering (S22) the sequence of time domain samples ({x[1], x[2], ..., x[T]}, 410) by a Kalman filter associated with a Kalman gain factor (K) and an estimated covariance matrix (P).

6. The method according to any previous claim, wherein determining the predicted time domain sample (x'[n], 445) is based on filtering (S23) the sequence of time domain samples ({x[1], x[2], ..., x[T]}, 410) in a forward direction (F) starting from a first time domain sample and in a reverse direction (R) ending at the first time domain sample, wherein the corresponding predicted time domain sample (x'[n], 445) of the radar signal is obtained as a weighted combination of the filtering in forward (F) and reverse (R) directions.

7. The method according to claim 6, comprising detecting (S41) at least one onset time instant of interference based on the forward filtering, and a respective cessation time instant of interference based on the reverse filtering.

8. The method according to any previous claim, wherein interference is detected (S41) based on a difference between the current time domain sample (x[n], 415) and a previous time domain sample (x[n-1]).

9. The method according to any previous claim, wherein interference is detected (S42) based on a difference (450) between the predicted time domain sample (x'[n], 445) and the current time domain sample (x[n], 415).

10. The method according to any previous claim, wherein the replacing comprises replacing (S51) a pre-determined length sub-sequence of time domain samples adjacent to the current time domain sample (x[n]) by a corresponding sequence of predicted time domain samples.

11. The method according to any previous claim, comprising determining (S3) an error (e[n]) based on a difference (450) between the predicted time domain sample (x'[n], 445) and the current time domain sample (x[n], 415), wherein filtering the sequence of time domain samples ({x[1], x[2], ..., x[T]}, 410) comprises updating (S6) filter weights based on the determined error (e[n])

12. The method according to claim 11, wherein the updating comprises updating (S61) weights based on a gradient descent method.

13. The method according to claim 11 or 12, wherein the updating is only performed (S62) in case no interference is detected in the current time domain sample (x[n], 415).

14. A control unit (130) arranged to suppress interference in a received radar signal (125), the device comprising an input port arranged to obtain time domain samples of the radar signal, and processing circuitry (710) arranged to perform the methods of any of claims 1-13.

15. A vehicle (100) comprising the control unit (130) according to claim 14.
